# EUROPÄISCHE PATENTSCHRIFT

(11) **EP 0 501 210 B1**
(45) Veröffentlichungstag und Bekanntmachung des Hinweises auf die Patenterteilung: **11.12.1996**
(21) Anmeldenummer: 92102139.0
(22) Anmeldetag: 08.02.1992
(51) Int. Cl.: C23D 13/00, C23D 5/02

(54) **Beschichtete Emaille- oder Glasurschicht mit einem spiegelnden oder irisierenden oder körperfarbezeigenden Effekt**
Coated enamel or glaze with a mirror or iridescent effect or showing the basic colour
Revêtement d'un émail ou d'une glaçure avec un effet miroir irisé ou montrant la couleur propre

(30) Priorität: 20.02.1991 DE 4105235
(43) Veröffentlichungstag der Anmeldung: 02.09.1992
(73) Patentinhaber: MERCK PATENT GmbH, D-64271 Darmstadt (DE)
(72) Erfinder: Hechler, Wolfgang, W-6147 Lautertal 1 (DE); Dietz, Johann, Dr., W-6057 Bickenbach (DE); Weigand, Manfred, Dr., W-6108 Weiterstadt (DE); Osterried, Karl, Dr., W-6110 Dieburg (DE)

(56) Entgegenhaltungen:
- EP-A- 0 072 995
- EP-A- 0 246 757
- WO-A-79/00247
- FR-A- 2 508 434
- GB-A- 1 467 459
- US-A- 4 830 879
- CHEMICAL ABSTRACTS, vol. 87, no. 16, 17. Oktober 1977, Columbus, Ohio, US; abstract no. 87:121771G, R.L. STEVENS ET AL.: 'Surface treatment for the improvement of vitreous enamel coatings' Seite 261 ;
- PATENT ABSTRACTS OF JAPAN vol. 9, no. 205 (C-299)22. August 1985
- CHEMICAL ABSTRACTS, vol. 92, no. 2, 14. Januar 1980, Columbus, Ohio, US; abstract no. 92:10194E, F. SIMONIS: 'Tin oxide as a spectral selective layer on black enamel' Seite 231 ;
- PATENT ABSTRACTS OF JAPAN vol. 5, no. 041 (C-047)18. März 1981

## Beschreibung

Die Erfindung betrifft ein beschichtetes System, welches auf einem Glasur- oder Emaillesubstrat eine spiegelnde und gegebenenfalls irisierende und/oder eine Körperfarbe zeigende, chemisch und mechanisch sehr stabile Oberflächenschicht aufweist, die durch Aufbringen und anschließendes Trocknen und Brennen eines wäßrigen Metalloxidsols hergestellt ist.

In JP 192785/1989 werden Tonwaren mit einer irisierenden Oberflächenschicht beschrieben, die dadurch erhalten wird, daß auf die Glasurschicht der Tonwaren eine Schicht aus kolloidalem Siliziumoxid aufgebracht und anschließend bei hohen Temperaturen zwischen 800 und 900 °C gebrannt wird. Die SiO₂-Schicht weist allerdings eine relativ hohe Dicke von bis zu 10 µm auf, was nachteilig ist, da dicke Schichten beim Brennen relativ poröse Oberflächen ergeben und zur Rißbildung neigen. Weiterhin wird durch die relativ große Schichtdicke die Brillanz der erzeugten Interferenzfarben erheblich beeinträchtigt, was besonders nachteilig ist, da die an der Phasengrenze SiO₂-Schicht/Glasurschicht reflektierte Lichtintensität wegen der relativ ähnlichen Brechnungsindices dieser Schichten ohnehin relativ gering ist.

In JP 63-48358 wird ein kompliziertes Verfahren zur Erzeugung relativ dicker und weitgehend rißfreier Zirkondioxidschichten auf einem Metall- oder Quarzglassubstrat vorgeschlagen. Dazu wird zunächst eine Zirkondioxidsolschicht aufgebracht und bei einer relativen Luftfeuchtigkeit von 70-95 % auf eine Temperatur zwischen 30 und 70 °C erwärmt; anschließend wird die Schicht bei einer relativen Luftfeuchtigkeit von 10-40 % mit einer niedrigen Heizgeschwindigkeit von 0,2-5 K/min auf Temperaturen von 100-500 °C erhitzt. Die relativ geringe maximale Heiztemperatur von weniger als 500 °C bewirkt jedoch eine chemisch und mechanisch weniger stabile Oberflächenschicht. Wegen der relativ hohen Schichtdicken von bis zu 8 µm und der trotz des komplizierten Herstellungsverfahrens nur bedingt glatten und rißfreien Oberfläche sind diese Systeme nicht zur Erzeugung eines Spiegelglanzes und/oder eines brillanten Farbspiels von hohem ästhetischen Reiz geeignet und folgerichtig werden in JP 63-48358 die optischen Eigenschaften der erhaltenen Oberflächenschichten nicht beschrieben.

In EP-A-0 246 757 wird nicht nur ein Verfahren zur Herstellung von SiO₂-Sol zur Beschichtung von Substraten beschreiben, sondern auch die Herstellung von Al₂O₃-Sol, Sole aus magnetischen Oxiden, Halogensalzsole z.B. aus AgI oder auch Sole aus Latexteilchen vorgeschlagen, jedoch sind keine konkreten Beispiele offenbart, in welchen Sole aus magnetischen Oxiden zur Substratbeschichtung verwendet werden. Desweiteren offenbart EP-A-0 246 757 im Allgemeinen, daß das Beschichtungsverfahren zur Modifikation der Lichtdurchlässigkeit und/oder der Spiegelung einer Substratoberfläche verwendet werden kann.

Es bestand somit ein Bedürfnis nach beschichteten Systemen mit einer spiegelnden und gegebenenfalls irisierenden und/oder eine Körperfarbe aufweisenden Oberflächenschicht auf einem Glasur- oder Emaillesubstrat, welche durch Aufbringen und anschließendes Tempern einer Metalloxidsolschicht erhältlich ist, wobei die Oberflächenschichten durch eine geringe Porosität, eine hohe mechanische und chemische Stabilität und insbesondere durch einen hohen Spiegelglanz und gegebenenfalls durch ein brillantes, auf einer Interferenz- und/oder Absorptionsfarbe beruhendes Farbspiel von hohem ästhetischen Reiz gekennzeichnet sind.

Die Aufgabe der vorliegenden Erfindung bestand in der Bereitstellung von beschichteten Systemen mit derartigen Oberflächen, die die bei herkömmlichen Oberflächen auftretenden Nachteile nicht oder nur in geringerem Umfang aufweisen.

Es wurde gefunden, daß diese Aufgabe durch die Bereitstellung der erfindungsgemäßen Systeme gelöst werden kann.

Gegenstand der Erfindung ist somit ein beschichtetes System, welches auf einem mit einer Emaille- oder Glasurschicht versehenen Substrat eine spiegelnde und gegebenenfalls irisierende und/oder eine Körperfarbe zeigende, chemisch und mechanisch sehr stabile Oberflächenschicht von hohem ästhetischen Reiz aufweist, die erhältlich ist
- durch ein- oder mehrmaliges Aufbringen wäßriger Metalloxidsole,
- durch ein sich an jeden Aufbringungsschritt anschließendes Trocknen und ggf. Glühen der Metalloxidsolschicht, wobei
- die Metalloxidsole eine mittlere Teilchengröße zwischen 5-200 nm aufweisen,
- zumindest einmal nach Abschluß des letzten Aufbringungsschritts geglüht wird und das Glühen bei Temperaturen erfolgt, die höher sind als 700 °C und unterhalb der Erweichungstemperatur des Substrats liegen,
- die auf der Glasur- bzw. Emailleschicht befindliche Metalloxidschicht nach dem Glühen einen Brechungsindex aufweist, der mindestens 0,5 höher ist als der Brechungsindex der Emaille- bzw. Glasurschicht und
- die Gesamtdicke der geglühten Metalloxidschichten kleiner als 500 nm ist.

Die erfindungsgemäßen Systeme basieren auf Metall-, Keramik- oder Quarzglassubstraten, die mit einer Emaille- oder Glasurschicht versehen sind. Der Begriff Emailleschicht ist in einem weiten Sinne zu verstehen und umfaßt Einschicht- und Mehrschichtemaillierungen. Bei der Glasurschicht kann es sich ebenfalls um ein- oder mehrschichtige Glasuren handeln, die hoch- oder niedrigschmelzend sein können. Substrate, deren Glasuren eine Erweichungstemperatur von mehr als 800 °C aufweisen, sind allerdings bevorzugt.

Die Substrate können regelmäßig oder unregelmäßig geformt sein und ihre Abmessungen können in einem weiten Bereich variieren. So können z.B. relativ kleine Substrate wie z.B. Schmuckstücke, etwa Amulette o.ä., oder keramische Zahnprothesen ebenso mit einer erfindungsgemäßen Oberfläche versehen werden wie z.B. auch Fliesen oder Kacheln, Geschirr, Sanitärobjekte, Schilder oder auch Ausgüsse, gußeiserne Heizöfen oder weitere Substrate mit wesentlich größeren Abmessungen. Diese Aufzählung geeigneter Substrate soll die Erfindung lediglich beispielhaft erläutern, ohne sie jedoch zu begrenzen.

Die Herstellung der Metalloxidsole erfolgt nach an sich bekannten Verfahren, indem eine wäßrige Lösung eines anorganischen oder organischen Metallsalzes hergestellt wird, welche dann z.B. durch Hydrolyse, die etwa durch Erhitzen bewirkt werden kann, und/oder durch saure Peptisierung und/oder durch Zugabe einer Base oder auch durch weitere Verfahren in den Solzustand überführt wird. Vielfach wird zur Änderung des pH-Wertes und/oder zur Stabilisierung des Sols das Anion des anorganischen oder organischen Metallsalzes z.B. mit Hilfe eines Anionenaustauschers, einer Ionenaustauschermembran oder durch Elektrodialyse entfernt, wie dies z.B. in EP 0,261,560 beschrieben ist.

Die in den erfindungsgemäß verwendeten Metalloxidsolen enthaltenen Sol-Teilchen weisen eine mittlere Größe zwischen 5 und 200 nm und insbesondere zwischen 5 und 100 nm auf. Das Sol kann zur Aufreinigung z.B. in einer Filtrationsvorrichtung mit destilliertem Wasser oder geeigneten Salzlösungen, wie etwa wäßrigen Natrium- oder Kaliumsalzlösungen, die nicht zu einer Koagulation des Sols führen, gewaschen werden, wie dies in JP 63-48358 vorgeschlagen ist.

Die Auswahl der für die Herstellung der Sole verwendeten Metalloxide basiert darauf, daß der Brechungsindex der auf der Glasur- bzw. Emailleschicht befindlichen Metalloxidschicht mindestens um 0,5 und insbesondere um mindestens 0,9 größer ist als der Brechungsindex der Emaille- bzw. Glasurschicht. An dieser Grenzfläche Glasur- bzw. Emailleschicht/Metalloxidschicht wird wegen des großen Brechungsindexsprungs ein erheblicher Teil des auftreffenden Lichts reflektiert, wodurch brillante und ästhetisch eindrucksvolle Interferenzfarben erzeugt werden können. Zur Herstellung der dem emaillierten bzw. glasierten Substrat unmittelbar benachbarten Schicht werden vorzugsweise Titanoxid-, Chromoxid-, Zinnoxid-, Zinkoxid-, Kobaltoxid-, Eisenoxid- oder Zirkoniumoxidsole oder Mischungen dieser Sole verwendet; besonders bevorzugt sind Titandioxid-, Eisenoxid- und/oder Chromoxidsole und ganz besonders brillante und ästhetisch eindrucksvolle Farben werden bei der Verwendung von Titanoxid und/oder Eisenoxid und insbesondere Titanoxid erhalten.

Die Metalloxidsolschicht wird nach dem Aufbringen bei Temperaturen von z.B. 100-200 °C getrocknet. Die Auftragung einer oder mehrerer weiterer Metalloxidsolschichten kann auf die getrocknete erste Schicht erfolgen; i.a. ist es aber bevorzugt, daß jede Schicht vor dem Aufbringen einer weiteren Schicht bei Temperaturen von 100-200 °C getrocknet und anschließend bei Temperaturen von mehr als 700 °C geglüht wird. Bei Systemen mit nur einer Schicht wird diese im Anschluß an den Trocknungsvorgang geglüht und bei Mehrschichtsystemen wird das System zumindestens einmal nach dem Aufbringen der letzten Schicht geglüht.

Die Glühtemperatur wird vorzugsweise höher als 800 °C und ganz besonders höher als 900 °C gewählt, wobei die Glühtemperatur jedoch unter der Erweichungstemperatur des Substrats liegen sollte. Ästhetisch besonders ansprechende Substrate mit hohem Spiegelglanz werden vielfach erhalten, wenn das beschichtete System nur für eine relativ kurze Zeit von z.B. wenigen Sekunden bis zu etwa 10 Minuten auf der maximalen Glühtemperatur gehalten wird, während die Temperatur relativ langsam mit Heizgeschwindigkeiten zwischen 5 und 30 K/min auf die maximale Glühtemperatur hochgefahren wird. Nach einem derartigen Temperaturprogramm getemperte Systeme weisen zudem vielfach eine besonders glatte Oberfläche von sehr hoher mechanischer Stabilität und Kratzfestigkeit auf. Da durch Glühen bei hohem Temperaturen der ästhetische Eindruck der erfindungsgemäßen Systeme verbessert wird und zudem auch eine Erhöhung der mechanischen Belastbarkeit erreicht wird, werden auch Substraten mit relativ niedriger Erweichungstemperatur vorzugsweise kurzzeitig, d.h. wenige Sekunden lang, bei Temperaturen geglüht, die dicht bei der Erweichungstemperatur liegen und manchmal kann wegen der Trägheit des Systems auch eine sehr kurze Überschreitung der Erweichungstemperatur zulässig sein.

Die erfindungsgemäßen Systeme weisen vorzugsweise nicht mehr als 4 übereinanderliegende Metalloxidschichten auf, wobei jedoch 1-, 2- oder 3-Schichtsysteme und insbesondere 1- oder 2-Schichtsysteme ganz besonders bevorzugt sind. Die Auswahl der zur Herstellung der zweiten und der folgenden Schichten benutzten Metalloxidsole ist i.a. weniger kritisch als die Auswahl des für die erste Schicht verwendeten Metalloxidsols. Vorzugsweise werden für die zweite und für die folgenden Schichten Titanoxid-, Chromoxid-, Zinnoxid-, Antimon-, Zinkoxid-, Kobaltoxid-, Eisenoxid-, Aluminiumoxid- oder Zirkoniumoxidsolen oder Mischungen dieser Sole verwendet.

Ästhetisch besonders reizvolle Systeme werden erhalten, wenn auf die auf der Emaille- bzw. Glasurschicht befindliche Metalloxidschicht zwei weitere Metalloxidschichten aufgebracht werden, wobei die erste dieser beiden zusätzlichen Schichten, die als Zwischenschicht fungiert, einen Brechungsindex aufweist, der mindestens 0,5 und bevorzugt 0,9 kleiner ist als der Brechungsindex der auf der Emaille- bzw. Glasurschicht befindlichen inneren Metalloxidschicht, während die auf die Zwischenschicht folgende äußere Metalloxidschicht einen Brechungsindex aufweist, der mindestens 0,5 und insbesondere 0,9 größer ist als der Brechungsindex der inneren, auf dem Emaille- bzw. Glasurschicht befindlichen Metalloxidschicht. Auf die äußere Metalloxidschicht können ggf. auch noch weitere Metalloxidschichten aufgebracht sein und es sind auch Systeme umfäßt, bei denen auf die beschriebenen 3 Schichten ein oder mehrere weitere Paare aus Metalloxidschichten mit stark unterschiedlichen Brechungsindizes aufgebracht sind.

Die Gesamtdicke der geglühten Metalloxidschichten ist kleiner als 500 nm und beträgt vorzugsweise zwischen 20 und 400 nm und ganz besonders zwischen 20 und 200 nm. Durch die Variation der Schichtdicke können verschiedene Interferenzfarben erhalten werden.

Bei Verwendung farbiger Metalloxidsole wie z.B. Eisenoxid-, Chromoxid- und/oder Cobaltoxidsol weist die erhaltene Oberflächenschicht auch eine Körperfarbe auf, was zusammen mit dem Spiegelglanz der Oberfläche und einer ggf. vorhandenen Interferenzfarbe besonders schöne und eindrucksvolle Effekte ergibt. Besonders bevorzugt können den Metalloxidsolen und insbesondere farblosen Metalloxidsolen auch farbige Metallsalze wie z.B. nichtoxidische anorganische Cobalt-, Nickel und/oder Chromsalze zugesetzt werden. Durch Verwendung derartiger Mischphasen ist es z.B. möglich, Einschichtsysteme mit einer Titanoxidschicht herzustellen, die wegen ihres hohen Brechungsindex besonders bevorzugt ist, wobei diese Schicht gleichzeitig eine durch das zugesetzte farbige Salz bestimmte Körperfarbe aufweist. Ganz allgemein wird durch die Verwendung dieser Mischphasen die Palette von erzielbaren Farbeffekten ganz beträchtlich vergrößert.

Zur Herstellung der erfindungsgemäßen Systeme wird die Oberfläche der emaillierten bzw. glasierten Substrate gereinigt. Die Aufbringung des jeweiligen Metalloxidsols bzw. der Metalloxidsolmischung bzw. der durch Zusatz von farbigen nichtoxidischen anorganischen Salzen zu Sol bzw. Solmischung erhaltenen Mischphase kann auf verschiedene Arten erfolgen. Im folgenden werden die Sole bzw. Solmischungen bzw. Mischphasen unter der Bezeichnung Sole subsummiert.

Die Substrate können z.B. einfach in das jeweilige Sol eingetaucht werden. Beim Herausziehen bleibt ein dünner Solfilm haften, wobei die Filmdicke u.a. von dem verwendeten Sol, von der Herausziehgeschwindigkeit und von der durch die Konzentration des Sols beeinflußten Viskosität abhängen. Sollen ganz besonders kleine Filmdicken erhalten werden, kann der Film auch teilweise von dem Substrat wieder abgeschleudert werden. Der Fachmann kann im Rahmen der vorliegenden Beschreibung ohne weiteres erfinderisches Zutun die Herausziehbedingungen für das jeweils verwendete Sol so optimieren, däß die jeweils gewünschte Schichtdicke reproduzierbar erhalten wird.

Weiterhin ist es auch möglich, daß das Sol z.B. über feine Düsen auf das Substrat aufgesprüht wird. Weist das Substrat plane Oberflächen auf, können vorzugsweise Drucktechniken zur Aufbringung des Sols verwendet werden. So kann das Sol z.B. mit einem handelsüblichen Siebdruckmedium versetzt und unter Verwendung eines Siebdruckgewebes aufgedruckt oder mit einer Rakel mit definierter Schichtdicke aufgerakelt werden oder indirekt über ein keramisches Schiebebild aufgebracht werden.

Das Substrat wird nach jedem Beschichtungsvorgang bei Temperaturen zwischen 50 und 250 °C und insbesondere zwischen 100 und 200 °C getrocknet und gegebenenfalls geglüht. Dabei werden in der Regel vorteilhafte Beschichtungen erhalten, wenn das Substrat nach jedem Beschichtungsvorgang getrocknet und geglüht wird. Die minimale Glühtemperatur beträgt 700 °C, vorzugsweise jedoch mindestens 800 °C und insbesondere 900 °C oder mehr, wobei das beschichtete Substrat vielfach nur kurz, z.B. zwischen nur einigen Sekunden bis etwa zu 10 Minuten, auf der maximalen Glühtemperatur gehalten wird. Als besonders vorteilhaft hat sich das oben beschriebene Aufheizprogramm erwiesen, bei dem die Substrattemperatur mit einer kleinen Heizgeschwindigkeit auf die maximale Heiztemperatur hochgefahren und ebenso vorzugsweise mit einer der Aufheizgeschwindigkeit vergleichbaren Geschwindigkeit wieder abgekühlt wird.

Die erfindungsgemäßen Systeme zeichnen sich durch einen hohen ästhetischen Reiz aus, der auf dem hohen Spiegelglanz, gegebenenfalls im Zusammenspiel mit einer Körperfarbe und/oder einer vom Betrachtungswinkel abhängigen Interferenzfarbe, beruht. Darüber hinaus sind die erfindungsgemäßen Systeme durch eine sehr glatte und kratzfeste Oberfläche und eine hohe Chemikalienbeständigkeit gekennzeichnet. Die erfindungsgemäßen Systeme sind auf Grund dieser Kombination von hervorragenden und ausgesprochen reizvollen optischen Eigenschaften mit einer hohen Stabilität den in der Literatur beschriebenen Systemen überlegen.

Die nachfolgend beschriebenen Beispiele sollen die Erfindung erläutern, ohne sie jedoch zu begrenzen.

### A. Herstellung des Metalloxidsols

a) 1 l vollentsalztes Wasser wird bei einer Temperatur von 5 °C durch Zugabe von 10%iger HCl auf pH=2 eingestellt. Anschließend werden bei einer Temperatur von 3-7 °C 250 ml einer wäßrigen TiCl₄-Lösung (400 g TiCl₄/l) unter starkem Rühren mit einer Dosiergeschwindigkeit von etwa 2 ml/min zugegeben. Durch gleichzeitige Zudosierung eines Ionenaustauschers (Ionenaustauscher II, Handelsprodukt von E. Merck, Darmstadt, Art.-Nr. 4766, Hydroxyl-Form) wird der pH-Wert auf pH=2,0-2,3 gehalten. Danach wird zur Abtrennung des Ionenaustauschers über ein Nylonfilter (Maschenweite etwa 80 µm) abfiltriert. Das Filtrat kann anschließend gegebenenfalls noch feinstfiltriert werden. Man erhält ein 3-3,5%iges Titandioxidsol mit einer mittleren Teilchengröße von weniger als 50 nm.
   Analog werden Chromoxid-, Zinnoxid-, Antimonoxid-, Zinkoxid-, Kobaltoxid-, Eisenoxid-, Aluminiumoxid- und auch weitere Metalloxidsole hergestellt.
b) 295 ml TiCl₄-Lösung (400 g TiCl₄/l) werden in 705 ml vollentsalztem Wasser gelöst und es werden unter starkem Rühren innerhalb von 3 Stunden 1,4 l eines Ionenaustauschers (Ionenaustauscher II, Handesprodukt von E. Merck, Darmstadt, Art.-No. 4766, Hydroxyl-Form) zudosiert. Durch die Zugabe des Ionenaustauschers steigt der pH-Wert von anfangs pH∼0 auf etwa pH∼2. Die weitere Aufarbeitung erfolgt wie bei A.a). Man erhält ein etwa 5%iges Titandioxidsol mit einer mittleren Teilchengröße von weniger als 50 nm.
   Analog werden Chromoxid-, Zinnoxid-, Antimonoxid-, Zinkoxid-, Kobaltoxid-, Eisenoxid-, Aluminiumoxid- und auch weitere Metalloxidsole hergestellt.

### B. Herstellung erfindungsgemäßer Systeme

### Beispiel 1

2,0 g eines 4%igen Titandioxidsols werden mit 10 g eines Siebdruckmediums verrührt (Degussa Siebdruckmedium 80683). Mit dieser Mischung wird eine handelsübliche weiß glasierte Kachel unter Verwendung eines 61T Siebdruckgewebes bedruckt und anschließend bei 100-150 °C getrocknet. Die beschichtete Kachel wird dann mit einer Heizgeschwindigkeit von etwa 16 K/min auf 1000 °C erhitzt. Die Kachel wird dann einige Sekunden auf dieser Temperatur gehalten und mit einer Geschwindigkeit von etwa 14 K/min abgekühlt. Die beschichtete Kachel weist eine farblose, glänzende Schicht mit einer Schichtdicke von etwa 40 nm auf, welche gegenüber Säuren und Laugen wie z.B. 3 % HCl, HCl_{konz}, 10% Citronensäure oder 10 % NaOH beständig ist.

### Beispiel 2

2,0 g eines 4%igen Titandioxidsols werden mit 10 g eines Siebdruckmediums verrührt (Degussa Siebdruckmedium 80683) und mit einer 100 µm-Rakel auf eine handelsübliche weiß glasierte Kachel aufgebracht. Die beschichtete Kachel wird bei 100-150 °C getrocknet und dann mit einer Heizgeschwindigkeit von etwa 16 K/min auf 1000 °C erhitzt. Die Kachel wird einige Sekunden auf dieser Temperatur gehalten und dann mit einer Geschwindigkeit von etwa 14 K/min abgekühlt.
Die beschichtete Kachel weise eine farblose, irisierende und glänzende Schicht mit einer Schichtdicke von etwa 120 nm auf, welche gegenüber Säuren und Laugen wie z.B. 3 % HCl, HCl_{konz}, 10 % Citronensäure oder 10 % NaOH beständig ist.

### Beispiel 3

Eine nach Beispiel 1 hergestellte Kachel wird mit einer Mischung aus 2,0 g 4%igem Aluminiumoxid und 10 g Siebdruckmedium (Degussa Siebdruckmedium 80683) bedruckt (61T Siebdruckgewebe). Diese Schicht wird bei 100-150 °C getrocknet und nach dem in Beispiel 1 angegebenen Temperaturprogramm geglüht. Auf diese Schicht wird anschließend nach dem in Beispiel 1 angegebenen Verfahren eine Titandioxidschicht aufgebracht, getrocknet und geglüht.

Die beschichtete Kachel weist eine hochglänzende, je nach Blickwinkel silbergold bis lila-blau schimmernde Schicht mit einer Schichtdicke von etwa 140 nm auf, welche gegenüber Säuren und Laugen wie z.B. 3 % HCl, HCl_{konz}, 10 % Citronensäure oder 10 % NaOH beständig ist.

### Beispiel 4

2,0 g eines 3,5%igen Fe₂O₃-Sols werden mit 10 g eines Siebdruckmediums verrührt (Degussa Siebdruckmedium 80683). Mit dieser Mischung wird eine handelsübliche weiß glasierte Kachel bedruckt (Siebdruckgewebe 61T) und anschließend bei 100-150 °C getrocknet. Die beschichtete Kachel wird dann mit einer Heizgeschwindigkeit von etwa 16 K/min auf 1000 °C erhitzt. Die Kachel wird dann einige Sekunden auf dieser Temperatur gehalten und mit einer Geschwindigkeit von etwa 14 K/min abgekühlt.
Die beschichtete Kachel weise eine ockerfarbene, hochglänzende Schicht mit einer Schichtdicke von etwa 35 nm auf. Wird die beschichtete Kachel ein weiteres Mal mit der obigen Mischung aus 2,0 g eines 3,5%igen Fe₂O₃-Sols und 10 g des Siebdruckmediums (Degussa Siebdruckmedium 80683) bedruckt (Siebdruckgewebe 61T) und anschließend getrocknet und geglüht, erhält man eine orange-rotbraune, hochglänzende Schicht mit einer Schichtdicke von etwa 70 nm.

## Patentansprüche

1. Beschichtetes System, welches auf einem mit einer Emaille- oder Glasurschicht versehenen Substrat aus Metall, Keramik oder Quarzglas eine spiegelnde und gegebenenfalls irisierende und/oder eine Körperfarbe zeigende, chemisch und mechanisch sehr stabile Oberflächenschicht von hohem ästhetischen Reiz aufweist, die erhältlich ist
- durch ein- oder mehrmaliges Aufbringen wäßriger Metalloxidsole, auf die Emaille - oder Glasurschicht,
- durch ein sich an jeden Aufbringungsschritt anschließendes Trocknen und ggf. Glühen der Metalloxidschicht, wobei
- die Metalloxidsole eine mittlere Teilchengröße zwischen 5-200 nm aufweisen,
- zumindest einmal nach Abschluß des letzten Aufbringungsschritts geglüht wird und das Glühen bei Temperaturen erfolgt, die höher sind als 700 °C und unterhalb der Erweichungstemperatur des Sübstrats liegen,
- die auf der Glasur- bzw. Emailleschicht befindliche Metalloxidschicht nach dem Glühen einen Brechungsindex aufweist, der mindestens 0,5 höher ist als der Brechungsindex der Emaille- bzw. Glasurschicht und
- die Gesamtdicke der geglühten Metalloxidschichten kleiner als 500 nm ist.

2. System nach Anspruch 1, dadurch gekennzeichnet, daß der Unterschied der Brechungsindices von Emaille- bzw. Glasurschicht und benachbarter Metalloxidschicht mindestens 0,9 beträgt.

3. System nach Anspruch 1, dadurch gekennzeichnet, daß die Metalloxidsole aus Titanoxid-, Chromoxid-, Zinnoxid-, Antimonoxid-, Zinkoxid-, Kobaltoxid-, Eisenoxid-, Aluminiumoxid- und/oder Zirkoniumoxidsolen bestehen.

4. System nach einem der Ansprüche 1-3, dadurch gekennzeichnet, daß die dem mit einer Emaille- oder Glasurschicht versehenen Substrat benachbarte Metalloxidschicht aus Titanoxid, Eisenoxid und/oder Chromdioxid besteht.

5. System nach einem der Ansprüche 1-4, dadurch gekennzeichnet, daß auf die dem mit einer Emaille- oder Glasurschicht versehenen Substrat benachbarte innere Metalloxidschicht 2 weitere Metalloxidschichten aufgebracht sind, wobei die erste dieser beiden Schichten einen Brechungsindex aufweist, der um mindestens 0,5 kleiner ist als der Brechungsindex der inneren Metalloxidschicht, während die äußere Schicht einen Brechungsindex aufweist, der um mindestens 0,5 größer ist als der Brechungsindex der mittleren Schicht.

6. Verfahren zur Herstellung eines Systems nach einem der Ansprüche 1-5, dadurch gekennzeichnet, daß eine oder mehrere Metalloxidsolschichten mit definierter Schichtdicke auf das mit einer Emaille- oder Glasurschicht versehene Substrat aufgebracht werden und daß das Substrat nach dem Aufbringen einer Schicht bei Temperaturen zwischen 50 und 250 °C getrocknet wird und ggf. geglüht wird, wobei
- zumindest einmal nach Abschluß des letzten Aufbringungsschritts geglüht wird bei Temperaturen, die höher sind als 700 °C und unterhalb der Erweichungstemperatur des Substrats liegen und
- die Gesamtschicktdicke der Metalloxidschichten nach dem Glühen kleiner als 500 nm ist.

7. Verfahren nach Anspruch 6, dadurch gekennzeichnet, daß das beschichtete Substrat mit einer Heizgeschwindigkeit zwischen 5 und 30 K/min auf die maximale Glühtemperatur von mindestens 700 °C aufgeheizt wird und daß die maximale Glühtemperatur einige Sekunden bis etwa 10 Stunden gehalten wird.

## Claims

1. Coated system which has a chemically and mechanically very stable surface coating of high aesthetic attraction which has a specular and optionally iridescent colour and/or a body colour on a metal, ceramic or quartz glass substrate provided with an enamel or glaze coating, the surface coating being obtainable
- by single or repeated application of aqueous metal oxide sols to the enamel or glaze coating,
- by subsequently drying and optionally igniting the metal oxide coating at each application step,
- the metal oxide sols having a mean particle size of between 5 and 200 nm,
- ignition being carried out at least once after completion of the final application step and at temperatures higher than 700°C and below the softening point of the substrate,
- the metal oxide coating on the glaze or enamel coating having, after ignition, a refractive index at least 0.5 higher than the refractive index of the enamel or glaze coating, and
- the total thickness of the ignited metal oxide coatings being less than 500 nm.

2. System according to Claim 1, characterised in that the difference between the refractive indices of the enamel or glaze coating and the adjacent metal oxide coating is at least 0.9.

3. System according to Claim 1, characterised in that the metal oxide sols comprise sols of titanium oxide, chromium oxide, tin oxide, antimony oxide, zinc oxide, cobalt oxide, iron oxide, aluminium oxide and/or zirconium oxide.

4. System according to one of Claims 1-3, characterised in that the metal oxide coating adjacent to the substrate provided with an enamel or glaze coating comprises titanium oxide, iron oxide and/or chromium dioxide.

5. System according to one of Claims 1-4, characterised in that 2 further metal oxide coatings are applied to the inner metal oxide coating adjacent to the substrate provided with an enamel or glaze coating, the first of these two coatings having a refractive index which is at least 0.5 lower than the refractive index of the inner metal oxide coating, and the outer coating having a refractive index which is at least 0.5 higher than the refractive index of the middle coating.

6. Process for the production of a system according to one of Claims 1-5, characterised in that one or more metal oxide sol coatings of defined coating thickness are applied to the substrate provided with an enamel or glaze coating, and in that the substrate, after the application of a coating, is dried at temperatures between 50 and 250°C and ignited if desired,
- ignition being carried out at least once after completion of the final application step and at temperatures higher than 700°C and below the softening point of the substrate, and
- the total coating thickness of the metal oxide coatings after ignition being less than 500 nm.

7. Process according to Claim 6, characterised in that the coated substrate is heated up to the maximum ignition temperature of at least 700°C at a heating rate of between 5 and 30 K/min, and in that the maximum ignition temperature is held for a few seconds up to about 10 hours.

## Revendications

1. Système revêtu, présentant sur un substrat en métal, en céramique ou en quartz, muni c'une couche d'émail ou de vernis, une couche de surface réfléchissante et éventuellement iridescente en/ou ayant une couleur propre, chimiquement et mécaniquement très stable, d'un attrait esthétique élevé, obtenu
- par une seule application ou par des applications répétées de sols aqueux d'oxydes métalliques sur la couche d'émail ou de vernis,
- par un séchage et éventuellement par une calcination, après chaque étape d'application, de la couche d'oxyde métallique,
- les sols d'oxydes métalliques présentant une taille moyenne des particules comprise entre 5 et 200 nm,
- en calcinant au moins une fois, après l'achèvement de la dernière étape d'application, la calcination étant effectuée à des températures supérieures à 700°C et inférieures à la température de ramollissement du substrat,
- la couche d'oxyde métallique se trouvant sur la couche de vernis ou d'émail présentant, après la calcination, un indice de réfraction au moins 0,5 fois plus élevé que l'indice de réfraction de la couche d'émail ou de vernis et
- l'épaisseur totale des couches de l'oxyde métallique calcinées étant inférieure à 500 nm.

2. Système selon la revendication 1, caractérisé en ce que la différence entre les indices de réfraction de la couche d'émail ou de vernis et de la couche d'oxyde métallique adjacente est d'au moins 0,9.

3. Système selon la revendication 1, caractérisé en ce que les sols de l'oxyde métallique sont constitués par des sols d'oxyde de titane, d'oxyde de chrome, d'oxyde d'étain, d'oxyde d'antimoine, d'oxyde de zinc, d'oxyde de cobalt, d'oxyde de fer, d'oxyde d'aluminium et/ou d'oxyde de zirconium.

4. Système selon l'une des revendications 1 à 3, caractérisé en ce que la couche d'oxyde métallique adjacente au substrat muni d'une couche d'émail ou de vernis, est constituée par de l'oxyde de titane, de l'oxyde de fer et/ou du dioxyde de chrome,.

5. Système selon l'une des revendications 1 à 4, caractérisé en ce que deux autres couches d'oxyde métallique sont appliquées sur la couche d'oxyde métallique interne adjacente au substrat muni d'une couche d'émail ou de vernis, la première de ces deux autres couches présentant un indice de réfraction au moins 0,5 fois plus petit que l'indice de réfraction de la couche d'oxyde métallique interne, tandis que la couche externe présente un indice de réfraction au moins 0,5 fois plus grand que l'indice de réfraction de la couche du milieu.

6. Procédé pour la préparation d'un système selon l'une des revendications 1 à 5, caractérisé en ce que l'on applique une ou plusieurs couches de sol de l'oxyde métallique, en une épaisseur définie sur le substrat muni d'une couche d'émail ou de vernis et en ce que l'on sèche le substrat après l'application d'une couche, à des températures comprises entre 50 et 250°C et éventuellement en ce qu'on le calcine
- en calcinant au moins une fois, après achèvement de la dernière étape d'application, à des températures supérieures à 700°C et inférieures à la température de ramollissement du substrat et
- l'épaisseur totale des couches de l'oxyde métallique, après la calcination, étant inférieure à 500 nm.

7. Procédé selon la revendication 6, caractérisé en ce que le substrat revêtu est porté à la température maximale de calcination d'au moins 700°C avec une vitesse de chauffage comprise entre 5 et 30 K/mn et en ce que la température maximale de calcination est maintenue pendant une durée allant de quelques secondes à environ 10 heures.
